# EUROPEAN PATENT APPLICATION

(11) **EP 4 649 830 A1**
(43) Date of publication of application: **19.11.2025**
(21) Application number: 25175366.1
(22) Date of filing: 09.05.2025
(51) Int. Cl.: A23G 3/34, A23G 3/36, A23G 3/54, A23G 4/06

(54) **CONFECTIONERY PRODUCT**

(30) Priority: 13.05.2024 IT 202400010753
(71) Applicant: Soremartec S.A., 2633 Senningerberg (LU)
(72) Inventor: LIBERATORE, Mauro, L-2633 Senningerberg (LU); INGROSSO, Alessandro, L-2633 Senningerberg (LU); CAFFA, Alberto, L-2633 Senningerberg (LU)
(74) Representative: Buzzi, Notaro & Antonielli d'Oulx S.p.A.

(57) **Abstract**

A method for producing a confectionery product, in particular a sweet or a comfit, comprising:
- providing at least one soft centre and loading said soft centre into a coating pan; and
- in the pan carrying out the following operations:
• applying a powdered acidic composition on said centre;
• dispensing on said centre a water suspension containing gum arabic and starch so as to form a separation film that coats said centre on which said acidic composition has previously been applied; and
• dispensing on said centre a syrup so as to form an outer coating of said product,

wherein in said product said separation film is provided for separating said acidic composition from said outer coating so as to prevent sugar inversion of said outer coating by said acidic composition.

## Description

The present invention relates to a method for producing a confectionery product, in particular a sweet or a comfit.

More in particular, the solution described herein refers to the production of sweets or comfits that have an acidic ingredient and that are coated with an outer layer of sugar.

The acidic ingredient is usually added to bestow upon the sweet a sour taste, which is a type of taste increasingly appreciated by consumers.

However, the presence of the acidic ingredient may cause the phenomenon of sugar inversion in the outer coating of the sweet, which manifests itself with the appearance of spots or patches and may thus alter the aesthetic quality of the product.

To overcome the aforesaid technical problem, there have already been proposed solutions that envisage providing in the sweet an intermediate layer that has the purpose of separating the acidic ingredient from the outer sugar coating. Solutions of this type are, for example, described in the documents JP 50801052 B2 and EP 2967109 B1.

In this context, the present invention regards a solution to the technical problem referred to above that is improved as compared to known solutions for the reasons mentioned hereinafter.

In general, the present invention regards a method according to claim 1.

Further characteristics and advantages of the present invention will emerge clearly from the ensuing description with reference to the annexed drawings, which are provided purely by way of non-limiting example and in which:
- Figure 1 is a schematic illustration of an example of the method described herein; and
- Figure 2 is a schematic illustration of a product obtained via implementation of the method of Figure 1.

In the ensuing description, various specific details are illustrated aimed at enabling an in-depth understanding of the embodiments. The embodiments may be obtained without one or more of specific details, or with other methods, components, or materials, etc. In other cases, known structures, materials, or operations are not illustrated or described in detail so that various aspects of the embodiment will not be obscured.

The references used herein are provided merely for convenience and hence do not define the sphere of protection or the scope of the embodiments.

As mentioned at the start, the solution described herein regards a method for producing a confectionery product, in particular a sweet or a comfit.

The solution described herein relates, more in particular, to products having a soft centre or core, preferably constituted by a hydrocolloid.

The softness of the centre constitutes an important aspect for two reasons. On the one hand, it affects the modality with which the product is consumed in so far as it stimulates the consumer to bite into the product and not just suck it. On the other hand, the softness of the centre affects the mechanical behaviour of the product during its production process, considering that the centre may undergo elastic deformation and hence be subject to minor variations in its geometry.

The method described herein envisages starting from the aforesaid soft centre and applying thereon an acidic composition and a series of layers of coating until the end product is obtained ready for packaging.

In some applications, the product may, however, still undergo further processing operations or treatments according to the requirements of the specific application.

As will be seen in what follows, the method described herein affords the advantage that it can be implemented entirely within a coating pan, so that it can be easily applied using known systems.

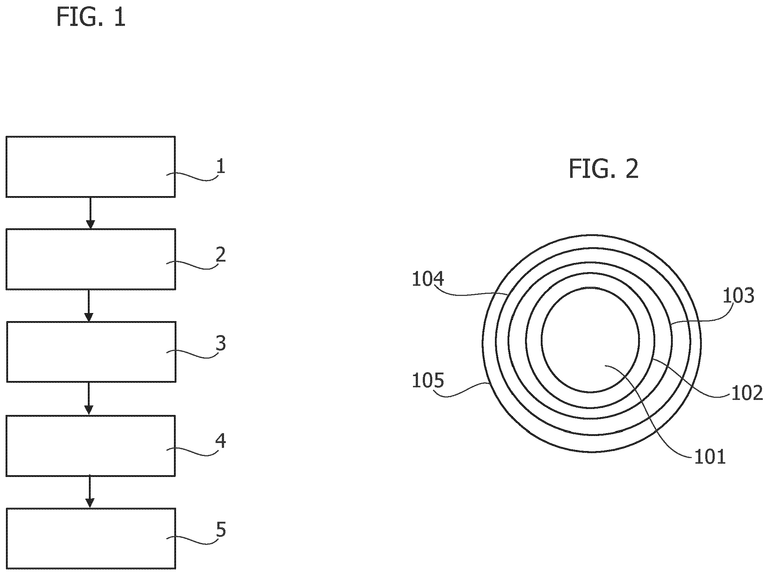

In one or more preferred embodiments like the one illustrated, the method described herein envisages loading the aforesaid soft centre into the receptacle of a coating pan (step 1 of Figure 1).

The pan may be a pan commonly used in the industrial context.

The method described herein then envisages applying a powdered acidic composition on the soft centre loaded into the pan (step 2 of Figure 1).

As anticipated at the start, the above acidic composition is applied on the centre to bestow a sour taste upon the end product.

In one or more preferred embodiments, the acidic composition comprises at least one acid, preferably in a weight percentage of between 50 wt% and 80 wt%, and gum arabic, preferably in a weight percentage of between 20 wt% and 50 wt% (with respect to the total weight of the acidic composition applied on the soft centre).

In one or more preferred embodiments, the acid may, for example, be selected from among the following substances: citric acid, malic acid, tartaric acid, etc.

The choice of setting the acidic ingredient of the product, not in the composition of the centre, but on a separate layer, facilitates preparation of the centre itself and at the same time leaves greater freedom in the choice of the acidic ingredient as well as of the respective amount to be used. On the other hand, chewing of the product will enable the consumer to taste simultaneously both the soft centre and the acidic composition that coats it.

In one or more preferred embodiments like the one illustrated, the method described herein then envisages obtaining, once again in the pan, a preferably soft inner coating, via spraying of a solution in water containing sugar and starch, on the soft centre on which the acidic composition has previously been applied (step 3 of Figure 1).

Preferably, the solution in question comprises sugar in a weight percentage of between 90 wt% and 99 wt% and starch in a weight percentage of between 1 wt% and 10 wt% (with respect to the total of the dry weights of sugar and starch).

The solution referred to above can be sprayed via the spray bar with which each pan is commonly equipped.

Preferably, the inner coating applied on the centre (already coated with the acidic composition) is soft, so that it can undergo deformation together with the centre as a result of the stresses induced by the process, without, however, getting damaged, for example, by the formation of cracks or parts that peel off.

In a way in itself known, precisely to favour formation of the aforesaid soft coating, into the pan there are moreover introduced sugar crystals that have the function of interacting with the aqueous solution referred to above.

In one or more preferred embodiments, in the aforesaid step of formation of the soft inner coating, the method described herein may moreover envisage introduction into the pan of one or more flavours.

As is in itself known, the formation of the inner coating is obtained through a series of steps (in particular, dosage of the solution, distribution on the product, and drying) that lead to obtaining a layer of coating of limited thickness; this process can, however, be repeated a number of times, according to the requirements of the specific applications, until a pre-set size of the product and pre-set amounts of the different ingredients are obtained.

The method described herein may, moreover, envisage the production of a further, preferably hard, inner coating via spraying of a syrup into the pan.

The method described herein then envisages providing on the semi-finished product constituted by the soft centre coated with the acidic composition and with the sugar-based inner coating or coatings, a separation film obtained by spraying on the semi-finished product a water suspension containing gum arabic and starch (step 4 of Figure 1).

Preferably, the water suspension comprises starch in a weight percentage of between 5 wt% and 35 wt% and gum arabic in a weight percentage of between 65 wt% and 95 wt% (with respect to the total of the dry weights of starch and gum arabic).

The separation film thus obtained has the function of separating the acidic composition applied on the soft centre from the outer sugar coating of the product, which will be described hereinafter, in order to prevent sugar inversion of the latter coating by the acidic composition.

The separation film is in fact able to hinder penetration of moisture towards the acidic composition applied on the centre thanks to the starch and to its capacity for absorbing water, preventing the latter from reaching the acidic composition.

Moreover, the separation film is able to follow the deformations of the centre and of the soft inner coating thanks to its elasticity deriving from the presence of the gum arabic in its composition.

The separation film may have very small thicknesses; for example, the separation film may have a thickness comprised between 0.025 mm and 0.065 mm inside a shell with a total thickness comprised between 1.40 mm and 2.2 mm. In this way, the separation film is not perceived by the consumer, nor does it alter the organoleptic and nutritional properties of the end product.

The separation film can be obtained in a simple and fast way during buildup of the product inside the pan, without any need to resort to particular expedients either from the standpoint of the process or from the standpoint of the means used.

For instance, the separation film can be provided between two successive steps of buildup of the product in which one of the inner coatings discussed above is formed.

In one or more preferred embodiments, the method described herein envisages applying multiple separation films for one and the same product, this in order to provide the product with very thin single films that together are in any case able to guarantee an effective separation of the acidic composition from the outer sugar coating.

In one or more preferred embodiments, on the product it is, for example, possible to provide a repeated succession of an inner sugar coating and a separation film.

In one or more preferred embodiments, the method described herein finally envisages applying a preferably hard outer sugar coating via spraying of a syrup, preferably a smoothing syrup, in the pan (step 4 of Figure 1).

Figure 2 is a schematic illustration of an example of product obtained using the method described herein, which comprises (starting from inside and moving outwards):
- a soft centre or core 101;
- an acidic composition 102;
- a soft inner sugar coating 103;
- a separation film 104; and
- an outer sugar coating 105.

Given what has been said above, the aforesaid outer coating is safeguarded from the phenomenon of sugar inversion and from its adverse effects on the aesthetic appearance of the product (the formation of spots or patches, as mentioned at the start) due to the acidic composition applied on the soft centre of the product thanks to the separation film described above, which prevents the moisture from reaching the acidic composition and the latter from thus possibly activating the aforesaid phenomenon.

As compared to the solutions according to the prior art the following advantages may be pointed out:
- a greater effectiveness in countering the phenomenon of sugar inversion given the same weight of the protective layer provided for this purpose;
- the possibility of providing a thin and compact separation film, which is not perceived by the consumer and does not affect the organoleptic and nutritional characteristics of the product;
- the fact that application of the separation film can be obtained directly in the pan, during buildup of the product, in short times and without any need to interrupt the normal production process; and
- the fact of reducing the curing times envisaged by the solutions according to the prior art.

It should be noted that the soft inner coating described above obtained by the solution of sugar and starch may itself contribute to countering penetration of moisture into the product.

The present applicant has, however, been able to verify experimentally that just by application of the separation film alone is it possible to solve the technical problem discussed herein.

In any case, the aforesaid soft inner coating might even not be provided.

Presented in the sequel is an example of the method described herein adopted by the present applicant.

### 1. PREPARATION OF THE CENTRES

For preparation of the centres, the following steps were carried out:
- mixing and cooking of a premix of glucose syrup, sugar, hydrocolloid, and water;
- addition and mixing of characterizing components (e.g., acids, fruit juices, etc.);
- dispensing of the centres in maize starch;
- drying of the centres in a hot cell;
- shake-out: separation of the dried centres from the maize starch of the moulds into which they had been poured;
- sugar sanding: moistening of the cores via a jet of steam and subsequent coating thereof with fine crystal sugar; and
- storage and stabilization of the centres for 15 days.

### 2. PAN COATING

The centres were then loaded into the receptacle of the pan and subjected to the following operations:
2.1 Dusting of the centres via suction and recirculation of dehumidified air. Temperature of the air = 20°C; absolute humidity (AH) = 1 g/m³.

### 2.2 Formation of an initial crust

The buildup syrup was prepared in a dissolutor:

| **Description** | **%** |
|---|---|
| Sugar | 73.72 |
| Starch | 2.28 |
| Demineralized water | 24 |
| TOTAL | **100.000** |

The syrup was then dispensed over the centres via the spray bar of the coating pan.

A drying step was then carried out, with suction and recirculation of dehumidified air. Temperature of the air = 22°C; AH = 1 g/m³.

The above steps were repeated until the desired weight of the product was OBTAINED. Each step leads to formation of a layer of sugar.

### 2.3 Acid sanding

A powdered sanding mix was prepared:

| **Description** | **%** |
|---|---|
| Gum arabic | 40 |
| Acids | 60 |
| TOTAL | **100.00** |

The buildup syrup was then dispensed over the product via the spray bar.

The sanding mix was introduced into the pan and, via the pan, was distributed in a homogeneous and uniform way, without suction and recirculation of the air.

The above steps were repeated until the desired weight of the product was obtained.

### 2.4 Formation of a second crust

The buildup syrup was dispensed over the product via the spray bar.

A drying step was then carried out, with suction and recirculation of dehumidified air; temperature of the air = 22°C; AH = 1 g/m³.

The above steps were repeated until the desired weight of the product was obtained.

### 2.5 Formation of the soft inner coating

The buildup syrup was dispensed over the product via the spray bar.

In the receptacle of the pan the fine crystal sugar was then introduced and was distributed over the product in a homogeneous and uniform way, via the pan, without suction and recirculation of the air.

A drying step was then carried out, with suction and recirculation of dehumidified air. Temperature of the air = 22-24°C; AH = 1 g/m³.

The above steps were repeated until the desired weight of the product was obtained.

Half-way through the buildup step, the characterizing flavour was dispensed and was distributed over the product in a homogeneous and uniform way, via the pan, without suction and recirculation of the air. Next, a drying step was carried out.

### 2.6 HARD COATING

The syrup was dispensed on the product via the spray bar and was distributed over the product in a homogeneous and uniform way, via the pan, without suction and recirculation of the air.

A drying step was then carried out, with suction and recirculation of dehumidified air. Temperature of the air = 28°C; AH = 1 g/m³.

The above steps were repeated until the desired weight of the product was obtained.

Half-way through and at the end of the buildup step, the characterizing flavour was dispensed and was distributed over the product in a homogeneous and uniform way, via the pan, without suction and recirculation of the air. Next, a drying step was carried out.

### 2.7 Formation of the separation film

A suspension of gum arabic and starch was prepared in the dissolutor:

| **Description** | **%** |
|---|---|
| Gum arabic | 25.5 |
| Starch | 4.5 |
| Demineralized water | 70 |
| TOTAL | **100.00** |

The gum/starch suspension was dispensed on the product via the spray bar. Simultaneously a drying step was carried out with suction and recirculation of dehumidified air. Temperature of the air = 22°C; AH = 1 g/m³.

Formation of the separation film was carried out twice, after each dispensing of the flavour during the HARD COATING step.

### 2.8 HARD COATING: smoothing

A smoothing syrup was prepared in the dissolutor:

| **Description** | **%** |
|---|---|
| Sugar | 72.890 |
| Colour | 1.110 |
| Demineralized water | 26 |
| TOTAL | **100.000** |

The smoothing syrup was dispensed on the product via the spray bar and was distributed over the product in a homogeneous and uniform way, via the pan, without suction and recirculation of the air.

A drying step was then carried out, with suction and recirculation of dehumidified air. Temperature of the air = 26°C; AH = 1 g/m³.

The above steps were repeated until the desired weight of the product was obtained.

### 2.9 POLISHING

Wax was dispensed on the product and was distributed over the product in a homogeneous and uniform way, via the pan, without suction and recirculation of the air.

A drying step was then carried out, with suction and recirculation of dehumidified air. Temperature of the air = 20°C; AH = 1 g/m³.

Of course, without prejudice to the principle of the invention, the details of implementation and the embodiments may vary, even significantly, with respect to what has been illustrated herein purely by way of non-limiting example, without thereby departing from the scope of the invention, as defined by the annexed claims.

## Claims

1. A method for producing a confectionery product, in particular a sweet or a comfit, comprising:
- providing at least one soft centre and loading said soft centre into a coating pan; and
- in the pan carrying out the following operations:
• applying a powdered acidic composition on said centre;
• dispensing on said centre a water suspension containing gum arabic and starch so as to form a separation film that coats said centre on which said acidic composition has previously been applied; and
• dispensing on said centre a syrup so as to form an outer coating of said product,
wherein in said product said separation film is provided for separating said acidic composition from said outer coating so as to prevent sugar inversion of said outer coating by said acidic composition.

2. The method according to claim 1, wherein said water suspension comprises gum arabic in a weight percentage of between 65 wt% and 95 wt% and starch in a weight percentage of between 5 wt% and 35 wt% with respect to the total of the dry weights of gum arabic and starch.

3. The method according to any one of the preceding claims, wherein said powdered acidic composition comprises gum arabic, preferably in a weight percentage of between 20 wt% and 50 wt%, and at least one acid, preferably in a weight percentage of between 50 wt% and 80 wt%.

4. The method according to any one of the preceding claims, comprising, prior to forming said separation film:
- dispensing on said centre on which said acidic composition has previously been applied a water solution containing sugar and starch so as to form a preferably soft inner coating.

5. The method according to claim 4, wherein said solution comprises sugar in a weight percentage of between 90 wt% and 99 wt% and starch in a weight percentage of between 1 wt% and 10 wt%, with respect to the total of the dry weights of sugar and starch.

6. The method according to any one of the preceding claims, wherein said soft centre comprises a hydrocolloid.

7. The method according to any one of the preceding claims, wherein said starch is preferably rice starch.

8. The method according to any one of the preceding claims, wherein the step of dispensing said suspension to form said separation film is repeated a number of times.

9. The method according to claim 8, comprising the following steps carried out in the coating pan:
- dispensing a syrup on said centre on which said acidic composition has previously been applied so as to form a preferably hard inner sugar coating;
- carrying out the step of dispensing said suspension to form said separation film; and
- repeating the aforesaid two steps one or more times.

10. The method according to any one of the preceding claims, wherein the amount of starch as a whole contained in said separation film and in said inner coating is comprised between 1 wt% and 3 wt% of the total weight of the confectionery product obtained by applying said method.

11. A confectionery product obtained by applying the method according to any one of the preceding claims.
